Europäisches Patentamt

European Patent Office

Office européen des brevets

(19)

(11) Veröffentlichungsnummer : **0 107 144**
**B1**

(12) **EUROPÄISCHE PATENTSCHRIFT**

(45) Veröffentlichungstag der Patentschrift :
**13.04.88**

(51) Int. Cl.⁴ : **B 01 D 53/34**

(21) Anmeldenummer : **83110154.8**

(22) Anmeldetag : **12.10.83**

---

(54) **Verfahren zum Abtrennen von Luftverunreinigungen aus Abgasen, insbesondere aus Rauchgas, durch Kondensation.**

---

(30) Priorität : **12.10.82 DE 3237699**

(43) Veröffentlichungstag der Anmeldung :
**02.05.84 Patentblatt 84/18**

(45) Bekanntmachung des Hinweises auf die Patenterteilung : **13.04.88 Patentblatt 88/15**

(84) Benannte Vertragsstaaten :
**AT BE CH DE FR GB IT LI LU NL SE**

(56) Entgegenhaltungen :
**DE-A- 2 148 244
DE-A- 2 304 784
DE-A- 2 822 808
DE-B- 1 234 912**

(73) Patentinhaber : **Toschi Produktions-GmbH
August-Bebel-Allee 1
D-2800 Bremen (DE)**

(72) Erfinder : **Faatz, Otto
Gnadenstaedter Strasse 14
D-3320 Salzgitter (DE)**

(74) Vertreter : **Eisenführ & Speiser
Martinistrasse 24
D-2800 Bremen 1 (DE)**

EP 0 107 144 B1

## Beschreibung

Die Erfindung betrifft ein Verfahren zum Abtrennen von Luftverunreinigungen aus Abgasen, insbesondere aus Rauchgas, bei welchem das Abgas mit einem Oxidationsmittel behandelt wird, sich bildende Säuren abgezogen werden und das gereinigte Gas in die Atmosphäre abgeleitet wird.

In den Abgasen industrieller Prozesse sind regelmäßig Stoffe enthalten, die man nach Möglichkeit nicht im Abgas belassen will, sei es, weil sie für andere Zwecke verwendet werden können, sei es, weil sie durch Abgabe in die Atmosphäre zu einer Umweltbelastung führen. Luftverunreinigungen, bzw. luftfremde Stoffe in Rauchgasen, bilden im Temperaturbereich unterhalb von etwa 160 °C zum Teil hochaggressive Säuren, die innerhalb der Atmosphäre bei hinreichender Konzentration zu Umweltschäden führen oder innerhalb technischer Anlagen durch Korrosion zu deren Zerstörung führen können.

Bei dem aus der DE-A-2 304 784 bekannten Verfahren der eingangs genannten Art ist ein dreistufiger Prozeß vorgesehen, in dem sich eine Entstaubungsphase, eine Schwefelsäure-Konzentrierungsphase und eine chemische Reinigung zur Absorption von Schwefeldioxid aneinander anschließen.

Dabei wird das Rauchgas nicht oxidierend behandelt. Das Oxidationsmittel wird erst dann mit dem Rauchgas kontaktiert, wenn dieses bereits durch die vorgeschaltete Schwefelsäurekonzentration erheblich abgekühlt und zudem mit Wasserdampf beladen worden ist.

Eine Kontaktierung des heißen Rauchgases mit dem Oxidationsmittel soll vermieden und stattdessen das Oxidationsmittel in der Kälte und in Gegenwart einer möglichst geringen Schwefelsäuremenge zugesetzt werden. Das soll dazu dienen, unerwünschte Aerosolbildungen zurückzuhalten.

Jedoch verläuft diese Oxidation in der Kälte und in flüssiger Phase nur relativ langsam, was bei der Reinigung großer Abgasmengen erhebliche Schwierigkeiten verursacht. Auch ist eine Verwertung der entstehenden Dünnsäuren meist wirtschaftlich nicht realisierbar.

Der Erfindung liegt die Aufgabe zugrunde, ein Verfahren der eingangs genannten Art vorzuschlagen, durch das eine schnelle und durchgreifende Abgasreinigung bei erhöhter Wirtschaftlichkeit ermöglicht wird.

Zur Lösung dieser Aufgabe ist das Verfahren der eingangs genannten Art erfindungsgemäß dadurch gekennzeichnet, daß das Abgas auf eine Temperatur von etwa 100°-72 °C und einen Wasserdampfgehalt von 30-400 g/m$^3$ eingestellt, dann bei einem Druck von 0,5-2,5 bar mit einer solchen Menge des Oxidationsmittels versetzt wird, daß sich ein auf den Stickoxid- und/oder Schwefelgehalt des Abgases bezogenes stöchiometrisches Verhältnis von $\lambda = 0,8-2,0$ bildet, daß dann in der Dampfphase gebildete Säuren nach Kondensation in flüssigem Zustand abgezogen werden, und daß das Abgas anschließend in mindestens einer weiteren Stufe unter den Wasserdampf-Taupunkt abgekühlt, das hier je Stufe entstehende und Verunreinigungen enthaltende Kondensat abgezogen und das gereinigte Gas in die Atmosphäre abgeleitet wird. Mit Vorteil kann hierbei vorgesehen sein, daß das Aufoxidieren von Schwefeldioxid zu Schwefeltrioxid katalytisch unterstützt wird.

Bevorzugte Ausgestaltungen des erfindungsgemäßen Verfahrens sind in den Unteransprüchen angegeben.

Einer der wesentlichen Gesichtspunkte für den Erfolg des Verfahrens ist darin zu sehen, daß die in der ersten Stufe der fraktionierten Kondensation abgeschiedene Schwefelsäure und/oder ggfs. Salpetersäure vergleichsweise hochprozentig und damit weniger aggressiv als die beim Stand der Technik entstehenden Säuren niedriger Konzentration ist.

Ein weiterer wichtiger Gesichtspunkt für die erfolgreiche Lösung der Aufgabe ist der erreichbare hohe Abscheidungsgrad von in den Abgasen enthaltenen Schwermetallen. Ursächlich hierfür ist die vergleichsweise tiefe Abkühlung des Gases unter den Wassertaupunkt in der letzten Kühlstufe.

Die Erfindung ist nachstehend anhand des in dem Flußdiagramm angegebenen Ausführungsbeispiels erläutert. Bei den dort und nachstehend genannten Gasmengen handelt es sich um Normkubikmeter, bei den Druckangaben im Flußdiagramm um die jeweilige Druckdifferenz zwischen Eingang der Anlagenstufe und Außen- bzw. Umgebungsdruck.

Das Ausführungsbeispiel betrifft die Reinigung des Rauchgases eines ölbeheizten Dampferzeugers. Sein Brenner erzeugt stündlich maximal 2 000 m$^3$ Rauchgas von 250 °C, einem Wassergehalt von 190 kg, einem Gehalt von 5 570 g Schwefeldioxid und einem Gehalt von 3 g Schwermetallen. Die Strömungsgeschwindigkeit liegt unter 12 m/s.

Dieses Rauchgas wird durch einen Vorkühler geleitet, durch den seine Temperatur auf 83,5 °C und in dem seine Strömungsgeschwindigkeit auf unter 3 m/s abgesenkt wird. Zur Kühlung dient Kühlwasser einer Eingangstemperatur von etwa 75 °C.

Durch die Vorkonditionierung des Rauchgases befindet sich dieses unterhalb des Schwefelsäure-Taupunktes, aber noch weit oberhalb des Wasser-Taupunktes.

Das konditionierte Rauchgas wird in einen Reaktor gegeben, in den außerdem stündlich 8,45 kg 35 %iges Wasserstoffperoxid als Oxidationsmittel im Gleich- oder Querstrom eingedüst wird. Das Oxidationsmittel ist aus wirtschaftlichen Gründen so bemessen, daß die bei durchschnittlicher Kesselleistung entstehende SO$_2$-Menge praktisch vollständig oxidiert wird. Unterstützt von einem Katalysator findet die Aufoxidation des Schwefeldioxides zu Schwefeltrioxid statt, das sich mit dem in Dampfform vorliegenden Wasser zu einer 30 %igen Schwefelsäure verbindet. Diese Schwefelsäure wird aus dem Reaktor in einer stündlichen Menge von 20,83 kg abgezogen.

Im Reaktor wird durch den Zerfall von Wasserstoffperoxid und durch die Vereinigung von Schwefeldioxid und Sauerstoff Wärme frei. Um die Gastemperatur im Reaktor gleichwohl im Sollbereich zu halten, kann das aus dem Vorkühler austretende Kühlwasser auch durch den Reaktor mit dem Ziel einer zusätzlichen Kühlung hindurchgeleitet werden. Das aus dem Reaktor ausströmende Gas mit einer stündlichen Menge von 1 982 m³, einem Wassergehalt von 180,91 kg, einer Temperatur von 72 °C und einer Strömungsgeschwindigkeit von unter 3 m/s enthält noch einen Rest von 1,49 kg Schwefeldioxid sowie sämtliche Schwermetalle. Dieses Gas durchströmt eine erste Kühlstufe mit Abscheider, die von dem vorgeheizten Kühlwasser durchströmt wird. Am Kühlwasserausgang der ersten Kühlstufe wird Warmwasser mit einer Temperatur von etwa 80 °C abgenommen.

Innerhalb der ersten Kühlstufe wird 23,36 kg 8,7 %ige Schwefelsäure als Kondensat abgeschieden. Der Anfall von Schwefelsäure beruht auf Betriebszeiten des Kessels mit über dem Durchschnitt liegender Kesselleitung. Dieses Kondensat kann auch Chlorwasserstoff enthalten, soweit im Abgas Chlorionen enthalten waren.

Anschließend gelangt das Gas in eine zweite Kühlstufe, und zwar mit einer stündlichen Menge von 1 956 m³, einer Temperatur von 61 °C, einer Geschwindigkeit von etwa 2,8 m/s einem Wassergehalt von 159,59 kg und einem Gehalt von Schwefeldioxid von 0,158 kg sowie der vollen Menge von 3 g Schwermetallen.

In der zweiten Kühlstufe wird das Gas auf etwa 30°-20 °C weiter heruntergekühlt. Das dabei anfallende Kondensat enthält 91,737 kg Wasser, 0,108 kg Schwefeldioxid sowie nahezu die gesamte Schwermetallmenge von 2,9 g.

Im Ausführungsbeispiel wird das nach der zweiten Kühlstufe in gereinigtem Zustand vorliegende Gas einer Nachheizung ausgesetzt, wodurch es auf etwa 85 % relativer Feuchte gebracht wird, in der es ohne Benutzung großer Schornsteine in die Atmosphäre abgelassen werden kann.

Das gereinigte Gas fällt in einer Menge von 1 843 m³ pro Stunde an ; es hat eine Temperatur von 40 °C bei einem Druck von 2,5 mbar und enthält Wasser in einer Menge von 67,85 kg. Von den wesentlichen Schadstoffen sind im Gas nur noch 50 g Schwefeldioxid und 0,1 g Schwermetalle enthalten. Insbesondere der Gehalt an Schwefeldioxid beträgt weniger als 1/10 des zur Zeit gesetzlich angestrebten Grenzwertes.

Betrachtet man den bekannten Nebeneffekt des Kondensationsverfahrens, nämlich die Wärmerückgewinnung, so ergibt sich für das Ausführungsbeispiel folgende Bilanz :

Bei einem Brennstoff mit einem oberen Heizwert von 42 735,52 kJ/kg enthält das Abgas vor seiner Konditionierung 9 247,1 kJ pro kg. Unter Berücksichtigung der Reaktionswärme und der fraktionierten Kondensation bis zu einer Endtemperatur von 20 °C (ohne Nachheizung) werden 7 075,9 kJ pro kg zurückgewonnen. Dies entspricht einem Rückgewinn von etwa 16,5 % vom oberen Heizwert. Nur noch ca. 5,5 % der eingesetzten Energie gehen in die Atmosphäre verloren.

In apparativer Hinsicht ist noch folgendes hervorzuheben : Im Regelfall wird es wegen der starken Herabsetzung der Ausgangstemperatur des Gases und im Hinblick auf Druckverluste in den Kühlern zweckmäßig sein, hinter den Nacherhitzer ein Gebläse anzuordnen. Der Reaktor und insbesondere die erste Kühlstufe müssen — soweit sie dem Abgas ausgesetzt sind bzw. im Bereich der Sammler für das Kondensat aus korrosionsfesten Materialien hergestellt sein. Brauchbar für diese Zwecke sind beispielsweise Glas oder PTFE. Die Strömungsgeschwindigkeit des gereinigten Abgases im Ausführungsbeispiel wird auf etwa 12 m pro Sekunde eingestellt.

Das Konditionieren des Abgases vor dem Eintritt in den Reaktor bedeutet im Falle von Rauchgasen im wesentlichen eine Abkühlung. Wenn andere Abgase von Verunreinigungen befreit werden sollen, so kann die Konditionierung auch in einer Aufheizung bestehen, die der fraktionierten Kondensation vorausgeht.

Das Eindüsen des Oxidationsmittels in das konditionierte Abgas hat den Vorteil eines optimalen Wirkungsgrades und stellt somit die wirtschaftlichste Verfahrensart dar. Darstellbar wäre aber auch ein Einführen des Oxidationsmittels in das Abgas vor der Konditionierung.

Aus Gründen der Vollständigkeit sei schließlich darauf hingewiesen, daß die jeweiligen Kondensate weiterverarbeitet werden. Die höherprozentige Schwefelsäure kann vielfach unmittelbar benutzt werden ; die geringerprozentige Schwefelsäure wird vor der Weiterverwendung in eine höherprozentige Schwefelsäure überführt.

Das im Kondensat enthaltene Wasser läßt sich mit Hilfe einer Umkehrosmose-Anlage zu etwa 93 % zu entmineralisiertem und entionisiertem Wasser aufbereiten, das sich vorzüglich als Kesselspeisewasser eignet. Verbleibende Kondensat-Konzentrate lassen sich elektro-chemisch behandeln. Die Schwermetalle können hierdurch als Elektrolyte oder in fester Form zurückgewonnen werden.

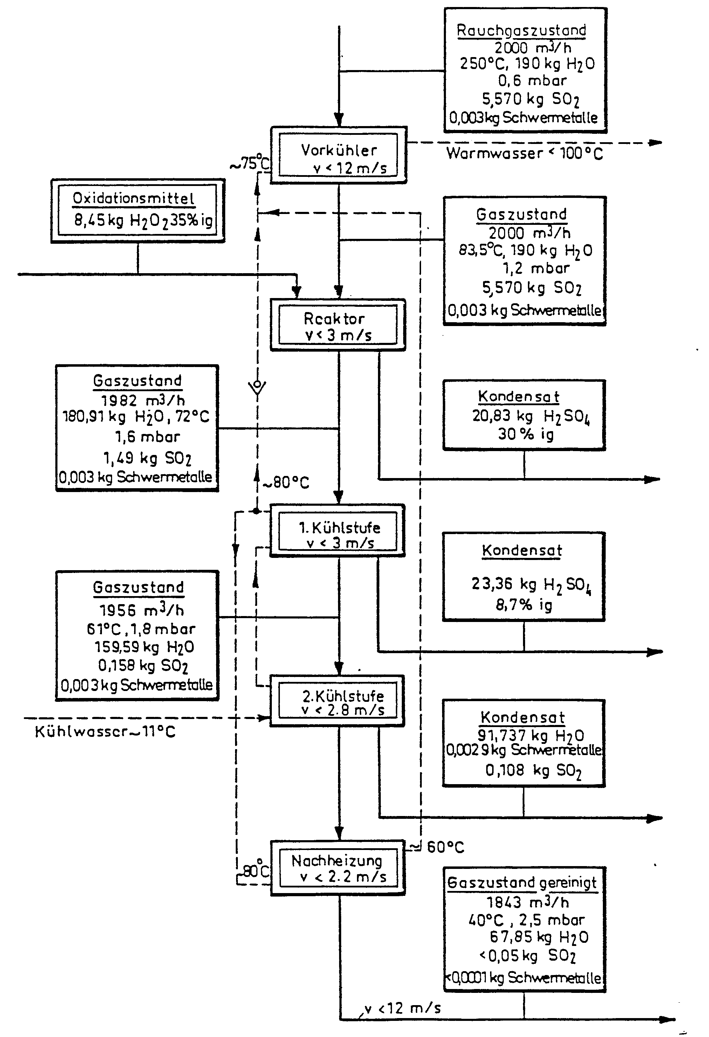

**Patentansprüche**

1. Verfahren zum Abtrennen von Luftverunreinigungen aus Abgasen, insbesondere aus Rauchgas, bei welchem das Abgas mit einem Oxidationsmittel behandelt wird, sich bildende Säuren abgezogen werden und das gereinigte Gas in die Atmosphäre abgeleitet wird, gekennzeichnet durch folgende Verfahrensschritte :

1) Einstellung des Abgases auf eine Temperatur von etwa 100° bis 72 °C, und einen Wasserdampfgehalt von 30 bis 400 g/m³ ;

2) nachfolgendes Zusetzen, bei einem Druck von 0,5 bis 2,5 bar, einer solchen Menge des Oxidationsmittels, daß sich ein auf den Stickoxid- und/oder Schwefelgehalt des Abgases bezogenes stöchiometrisches Verhältnis von λ = 0,8 bis 2,0 bildet ;

3) Abziehen von in der Dampfphase gebildeten Säuren nach Kondensation in flüssigem Zustand ;

4) nachfolgende Abkühlung des Gases in mindestens einer weiteren Stufe unter den Wasserdampf-Taupunkt, und

5) Abziehen des hier je Stufe entstehenden und Verunreinigungen enthaltenden Kondensats vom gereinigten, abzuleitenden Gas.

2. Verfahren nach Anspruch 1, dadurch gekennzeichnet, daß das Abgas vor Einleitung des Oxidationsmittels auf eine Temperatur von 83,5 °C eingestellt wird.

3. Verfahren nach Anspruch 1 oder 2, dadurch gekennzeichnet, daß das oxidationsmittel bei einer Strömungsgeschwindigkeit der Abgase von unter 3 m/s zugegeben wird.

4. Verfahren nach einem der Ansprüche 1 bis 3, dadurch gekennzeichnet, daß das Abgas auf einen Wasserdampfgehalt von 90-100 g/m³ eingestellt wird.

5. Verfahren nach einem der Ansprüche 1 bis 4, dadurch gekennzeichnet, daß das Oxidationsmittel $H_2O_2$ ist.

6. Verfahren nach einem der Ansprüche 1 bis 5, dadurch gekennzeichnet, daß das Oxidationsmittel zerstäubt und dem Abgas im Quer- oder Gleichstrom zugeführt wird.

7. Verfahren nach einem der Ansprüche 1 bis 6, dadurch gekennzeichnet, daß das stöchiometrische Verhältnis λ = 0,8 beträgt.

8. Verfahren nach einem der Ansprüche 1 bis 7, dadurch gekennzeichnet, daß das Abgas nach dem Entzug der schwefligen Verunreinigungen und/oder die Stickoxide in einer ersten Kühlstufe soweit in den Grenzbereich der Wasserdampfsättigung abgekühlt wird, daß eine ggf. Salzsäure enthaltende Kondensatmenge von bis zu etwa 5 g/m³ entsteht, daß dieses Kondensat aus dem Abgas herausgeführt und das Abgas dann in mindestens einer weiteren Kühlstufe auf etwa atmosphärische Temperatur abgekühlt und das entstehende ggf. Schwermetall enthaltende Kondensat ebenfalls herausgezogen wird.

9. Verfahren nach Anspruch 8, dadurch gekennzeichnet, daß das Abgas am Eingang der ersten Kühlstufe auf 72 °C und am Eingang der zweiten Kühlstufe auf 61 °C eingestellt wird.

10. Verfahren nach einem der Ansprüche 1 bis 9, dadurch gekennzeichnet, daß das gereinigte Gas vor dem Ablassen in die Atmosphäre in einem Zustand von etwa 85 % rel. Feuchte nacherwärmt wird.

**Claims**

1. Process for separating air impurities from waste gases, more especially from flue gas, in which the waste gas is treated with an oxidising agent, forming acids are extracted and the purified gas is discharged into the atmosphere, characterised by the following processing steps :

1) adjustment of the waste gas to a temperature of about 100° to 72 °C and a water vapour content of 30 to 400 g/m³ ;

2) subsequent addition, at a pressure of 0.5 to 2.5 bar, of such a quantity of the oxidising agent that there is formed a stoichiometric ratio of λ = 0.8 to 2.0 relative to the nitric oxide and/or sulphur content of the waste gas ;

3) extraction of acids formed in the vapour phase, after condensation, in the liquid state ;

4) subsequent cooling of the gas in at least one additional stage below the water vapour dew point, and

5) extraction from the purified gas to be discharged of the condensate which is here formed with each stage and contains impurities.

2. Process according to claim 1, characterised in that the waste gas, prior to introduction of oxidising agent, is adjusted to a temperature of 83.5 °C.

3. Process according to claim 1 or 2, characterised in that the oxidising agent is added with a flow velocity of the waste gases of below 3 m/s.

4. Process according to one of the claims 1 to 3, characterised in that the waste gas is adjusted to a water vapour content of 90-100 g/m³.

5. Process according to one of claims 1 to 4, characterised in that the oxidising agent is $H_2O_2$.

6. Process according to one of claims 1 to 5, characterised in that the oxidising agent is comminuted and is supplied to the waste gas transversely or unidirectionally.

7. Process according to one of claims 1 to 6, characterised in that the stoichiometric ratio λ = 0.8.

8. Process according to one of claims 1 to 7, characterised in that the waste gas, after the extraction of the sulphurous impurities and/or the nitric oxides, is cooled in a first cooling stage so far into the limiting range of the steam saturation that there is formed a quantity of condensate, possibly containing hydrochloric acid, and of up to approximately 5 g/m³, that this condensate is removed from the waste gas and the latter is then cooled in at least one additional cooling stage to approximately atmospheric temperature and the forming condensate, possibly containing heavy metal, is also extracted.

9. Process according to claim 8, characterised in that the waste gas is adjusted to 72 °C on entering the first cooling stage and to 61 °C on entering the second cooling stage.

10. Process according to one of the claims 1 to 9, characterised in that the purified gas is reheated before being discharged into the atmosphere in a state of about 85 % relative humidity.

**Revendications**

1. Procédé pour éliminer des constituants pol-·

luant l'air à partir de gaz d'échappement, notamment de gaz de fumées, dans lequel les gaz d'échappement sont traités par un agent oxydant, les acides qui se forment sont séparés et les gaz épurés sont évacués dans l'atmosphère, caractérisé par les étapes de procédé suivantes :

1) réglage des gaz d'échappement à une température de 100 à 72 °C environ et à une teneur en vapeur d'eau de 30 à 400 g/m³ ;

2) addition subséquente, à une pression de 0,5 à 2,5 bars, d'une quantité de l'agent oxydant telle qu'il s'établisse un rapport stœchiométrique λ = 0,8 à 2,0 rapporté à la teneur des gaz d'échappement en oxydes azotiques et/ou en soufre ;

3) séparation des acides formés dans la phase vapeur, après condensation à l'état liquide ;

4) refroidissement subséquent des gaz au-dessous du point de rosée de la vapeur d'eau au cours d'au moins un étage supplémentaire, et

5) extraction dans les gaz épurés à évacuer, du condensat formé à chaque étage et contenant des constituants polluants.

2. Procédé selon la revendication 1, caractérisé en ce que les gaz d'échappement sont réglés à une température de 83,5 °C avant l'introduction de l'agent oxydant.

3. Procédé selon la revendication 1 ou 2, caractérisé en ce que l'agent oxydant est ajouté avec une vitesse d'écoulement des gaz d'échappement inférieure à 3 m/s.

4. Procédé selon l'une quelconque des revendications 1 à 3, caractérisé en ce que les gaz d'échappement sont réglés à une teneur en vapeur d'eau de 90 à 100 g/m³.

5. Procédé selon l'une des revendications 1 à 4, caractérisé en ce que l'agent oxydant est $H_2O_2$.

6. Procédé selon l'une des revendications 1 à 5, caractérisé en ce que l'agent oxydant est pulvérisé et introduit dans les gaz d'échappement suivant un courant transversal ou un courant parallèle.

7. Procédé selon l'une des revendications 1 à 6, caractérisé en ce que le rapport stœchiométrique λ est égal à 0,8.

8. Procédé selon l'une des revendications 1 à 7, caractérisé en ce qu'après l'élimination des constituants polluants soufrés et/ou des oxydes azotiques, les gaz d'échappement sont refroidis dans un premier étage de refroidissement dans le domaine limite de la saturation en vapeur d'eau, suffisamment pour qu'il y ait une quantité de condensat allant jusqu'à 5 g/m³ et contenant le gaz échéant de l'acide chlorhydrique, en ce que ce condensat est éliminé des gaz d'échappement et en ce que ces gaz d'échappement sont refroidis dans au moins un autre étage de refroidissement sensiblement à la température de l'atmosphère, le condensat produit, qui contient le cas échéant des métaux lourds, étant également éliminé.

9. Procédé selon la revendication 8, caractérisé en ce que les gaz d'échappement sont réglés à 72 °C à l'entrée du premier étage de refroidissement et à 61 °C à l'entrée du deuxième étage de refroidissement.

10. Procédé selon l'une des revendications 1 à 9, caractérisé en ce que les gaz épurés sont réchauffés à un état correspondant à 85 % d'humidité relative environ avant d'être évacués dans l'atmosphère.

**0 107 144**

Rauchgaszustand
2000 m³/h
250°C, 190 kg H₂O
0,6 mbar
5,570 kg SO₂
0,003kg Schwermetalle

Vorkühler
v < 12 m/s
→ Warmwasser < 100°C

~75°C

Oxidationsmittel
8,45 kg H₂O₂ 35%ig

Gaszustand
2000 m³/h
83,5°C, 190 kg H₂O
1,2 mbar
5,570 kg SO₂
0,003 kg Schwermetalle

Reaktor
v < 3 m/s

Gaszustand
1982 m³/h
180,91 kg H₂O, 72°C
1,6 mbar
1,49 kg SO₂
0,003 kg Schwermetalle

Kondensat
20,83 kg H₂SO₄
30 % ig

~80°C

1. Kühlstufe
v < 3 m/s

Kondensat
23,36 kg H₂SO₄
8,7% ig

Gaszustand
1956 m³/h
61°C, 1,8 mbar
159,59 kg H₂O
0,158 kg SO₂
0,003 kg Schwermetalle

2. Kühlstufe
v < 2.8 m/s

Kühlwasser ~11°C

Kondensat
91,737 kg H₂O
0,0029 kg Schwermetalle
0,108 kg SO₂

~60°C

Nachheizung
v < 2.2 m/s

~80°C

Gaszustand gereinigt
1843 m³/h
40°C, 2,5 mbar
67,85 kg H₂O
<0,05 kg SO₂
<0,0001 kg Schwermetalle

v < 12 m/s

1